# EUROPEAN PATENT APPLICATION

(11) **EP 4 572 341 A1**
(43) Date of publication of application: **18.06.2025**
(21) Application number: 22954531.4
(22) Date of filing: 11.08.2022
(51) Int. Cl.: H04W 4/02

(54) **INFORMATION PROCESSING METHOD AND APPARATUS, AND COMMUNICATION DEVICE AND STORAGE MEDIUM**

(71) Applicant: Beijing Xiaomi Mobile Software Co., Ltd., Beijing 100085 (CN)
(72) Inventor: LU, Wei, Beijing 100085 (CN)
(74) Representative: Dehns Germany Partnerschaft mbB
(86) International application number: PCT/CN2022/111886
(87) International publication number: WO 2024/031565

(57) **Abstract**

Provided in the embodiments of the present disclosure are an information processing method and apparatus, and a communication device and a storage medium. The information processing method is executed by a first UE, and comprises: sending first request information to a second UE, wherein the first request information comprises first identification information of the first UE and second identification information of the second UE, the first request information being used for requesting the establishment of direct connection communication, and the first request information also comprising: third identification information of a third UE used for requesting a ranging result, and a ranging service code used for indicating a requested ranging service.

## Description

### TECHNICAL FIELD

The present disclosure relates to, but is not limited to, the field of wireless communication technology, and in particular to an information processing method and apparatus, a communication device, and a storage medium.

### BACKGROUND

In the related art, a third-party User Equipment (UE) acquires ranging/SideLink (SL) positioning results through an assistant UE. The assistant UE uses a direct connection discovery process to expose its ranging/SL positioning service to the third-party UE. The third-party UE does not need to have the ranging/SL positioning function, and may also perform discovery between UEs and selection of assistant UEs based on the assistant ranging information in the discovery message broadcast by the assistant UE.

After discovery between the third-party UE and the assistant UE, the third-party UE calls the ranging/SL positioning service of the assistant UE to acquire the ranging result between UE1 and UE2. The assistant UE performs a ranging process on UE1 and UE2 respectively, and calculates the ranging result between UE1 and UE2 based on the ranging result between UE1 and itself as well as the ranging result between UE2 and itself.

The current security mechanism can only ensure that the third-party UE is permitted to call the ranging service with the assistant UE. But, there is no existing method for the assistant UE to check whether the third-party UE is permitted to request the ranging result of the target UE (such as UE1 and UE2). Therefore, the current security mechanism cannot prevent a misbehaving third-party UE from requesting the ranging result of the target UE (for example, UE1 and UE2).

### SUMMARY

The embodiments of the present disclosure provide an information processing method and apparatus, a communication device, and a storage medium.

According to a first aspect of the embodiments of the present disclosure, an information processing method is provided, which is performed by a first UE, and includes sending a first request message to a second UE.

The first request message includes the first identification information of the first UE and the second identification information of the second UE. The first request message is used to request establishment of a direct connection communication. The first request message further includes: the third identification information of a third UE for requesting the ranging result, and the ranging service code for indicating the request ranging service.

In some embodiments, the method includes receiving a first response message sent by the second UE. The first response message includes rejection indication information. The rejection indication information is used to indicate suspension of establishing the direct connection communication.

According to a second aspect of the embodiments of the present disclosure, an information processing method is provided, which is performed by a second UE, and includes receiving a first request message sent by a first UE.

The first request message includes the first identification information of the first UE and the second identification information of the second UE. The first request message is used to request establishment of a direct connection communication. The first request message further includes: the third identification information of a third UE for requesting the ranging result, and the ranging service code for indicating the request ranging service.

In some embodiments, the method includes sending a second request message to the first network node. The second request message includes: the second identification information, the first identification information, the third identification information, and the ranging service code. The second request message is used to request permission for the first UE to acquire the ranging result of the third UE.

In some embodiments, the first network node is a ProSe Key Management Function (PKMF) of the second UE or a Policy Control Function (PCF) of the second UE.

In some embodiments, the method includes receiving a second response message sent by the first network node. The second response message is used to indicate whether the first UE is authorized to acquire the ranging result of the third UE.

In some embodiments, the method includes sending a second request message to the second network node. The second request message includes: the second identification information, the first identification information, the third identification information, and the ranging service code. The second request message is used to request permission for the first UE to acquire the ranging result of the third UE.

In some embodiments, the second network node is a ranging positioning server.

In some embodiments, the method includes receiving a second response message sent by the second network node. The second response message is used to indicate whether the first UE is authorized to acquire the ranging result of the third UE.

In some embodiments, the method includes: determining, based on the second response message, that the first UE is authorized to acquire the ranging result of the third UE; and sending a first response message including success indication information to the first UE. The success indication information is used to indicate a successful establishement of the direct connection communication.

Alternatively, the method includes: determining, based on the second response message, that the first UE is not authorized to acquire the ranging result of the third UE; and sending a first response message including rejection indication information to the first UE. The rejection indication information is used to indicate suspension of establishing the direct connection communication.

According to a third aspect of the embodiments of the present disclosure, an information processing method is provided, which is performed by a first network node, and includes receiving a second request message sent by a second UE.

The second request message includes: the second identification information, the first identification information, the third identification information, and the ranging service code for indicating a request ranging service. The second request message is used to request permission for the first UE to acquire the ranging result of the third UE.

The second request message is sent by the second UE after receiving the first request message. The first request message is used to request establishment of a direct communication connection between the first UE and the second UE.

In some embodiments, the first request message includes: the first identification information, the second identification information, the ranging service code, and the third identification information of the third UE for requesting the ranging result.

In some embodiments, the method includes: sending a second request message to a third network node; and receiving a second response message sent by the third network node. The second response message is used to indicate whether the first UE is authorized to acquire the ranging result of the third UE.

In some embodiments, the method includes: sending a second request message to a second network node; and receiving a second response message sent by the second network node. The second response message is used to indicate whether the first UE is authorized to acquire the ranging result of the third UE.

In some embodiments, the method includes: sending a second response message to the second UE.

In some embodiments, the second response message is determined by the third network node, or the third response message is acquired by the third network node from the second network node.

In some embodiments, the third network node is the PKMF of the first UE or the PCF of the first UE.

In some embodiments, the first network node is the PKMF of the second UE or the PCF of the second UE.

According to a fourth aspect of the embodiments of the present disclosure, an information processing method is provided, which is performed by a second network node, and includes receiving a second request message sent by a first network node or a third network node.

The second request message includes: the second identification information, the first identification information, the third identification information, and the ranging service code for indicating a request ranging service. The second request message is used to request permission for the first UE to acquire the ranging result of the third UE.

The second request message is sent by the second UE after receiving the first request message. The first request message is used to request establishment of a direct communication connection between the first UE and the second UE.

In some embodiments, the first request message includes: the first identification information, the second identification information, the ranging service code, and the third identification information of the third UE for requesting the ranging result.

In some embodiments, the method includes sending a second response message to the first network node or the third network node. The second response message is used to indicate whether the first UE is authorized to acquire the ranging result of the third UE.

According to a fifth aspect of the embodiments of the present disclosure, an information processing method is provided, which is performed by a third network node, and includes receiving a second request message sent by a first network node.

The second request message includes: the second identification information, the first identification information, the third identification information, and the ranging service code for indicating a request ranging service. The second request message is used to request permission for the first UE to acquire the ranging result of the third UE.

The second request message is sent by the second UE after receiving the first request message. The first request message is used to request establishment of a direct communication connection between the first UE and the second UE.

In some embodiments, the first request message includes: the first identification information, the second identification information, the ranging service code, and the third identification information of the third UE for requesting the ranging result.

In some embodiments, the method includes: acquiring a second response message, where the second response message is used to indicate whether the first UE is authorized to acquire the ranging result of the third UE; and sending a second response message to the first network node.

In some embodiments, acquiring the second response message includes: determining the second response message based on the second request message.

In some embodiments, the method includes sending the second request message to the second network node.

Acquiring the second response message includes: receiving the second response message sent by the second network node.

In some embodiments, the second network node is a ranging positioning server.

Furthermore or alternatively, the first network node is a ProSe Key Management Function (PKMF) of the second UE or a Policy Control Function (PCF) of the second UE.

Furthermore or alternatively, the third network node is a ProSe Key Management Function (PKMF) of the first UE or a Policy Control Function (PCF) of the first UE.

According to a sixth aspect of the embodiments of the present disclosure, an information processing apparatus is provided, including: a first sending module, configured to send a first request message to a second UE.

The first request message includes the first identification information of the first UE and the second identification information of the second UE. The first request message is used to request establishment of a direct connection communication. The first request message further includes: the third identification information of the third UE for requesting the ranging result, and the ranging service code for indicating the request ranging service.

In some embodiments, the apparatus includes: a first receiving module, configured to receive a first response message sent by the second UE. The first response message includes rejection indication information. The rejection indication information is used to indicate suspension of establishing the direct connection communication.

According to a seventh aspect of the embodiments of the present disclosure, an information processing apparatus is provided, including: a second receiving module, configured to receive a first request message sent by the first UE.

The first request message includes the first identification information of the first UE and the second identification information of the second UE. The first request message is used to request establishment of a direct connection communication. The first request message further includes: the third identification information of the third UE for requesting the ranging result, and the ranging service code for indicating the request ranging service.

In some embodiments, the apparatus includes: a second sending module, configured to send a second request message to the first network node. The second request message includes: the second identification information, the first identification information, the third identification information, and the ranging service code. The second request message is used to request permission for the first UE to acquire the ranging result of the third UE.

In some embodiments, the first network node is the PKMF of the second UE or the PCF of the second UE.

In some embodiments, the second receiving module is configured to receive the second response message sent by the first network node. The second response message is used to indicate whether the first UE is authorized to acquire the ranging result of the third UE.

In some embodiments, the second sending module is configured to send a second request message to the second network node. The second request message includes: the second identification information, the first identification information, the third identification information, and the ranging service code. The second request message is used to request permission for the first UE to acquire the ranging result of the third UE.

In some embodiments, the second network node is a ranging positioning server.

In some embodiments, the second receiving module is configured to receive the second response message sent by the second network node. The second response message is used to indicate whether the first UE is authorized to acquire the ranging result of the third UE.

In some embodiments, the second sending module is configured to: determine, based on the second response message, that the first UE is authorized to acquire the ranging result of the third UE; and send a first response message including success indication information to the first UE. The success indication information is used to indicate a successful establishment of the direct connection communication.

Alternatively, the second sending module is configured to: determine, based on the second response message, that the first UE is not authorized to acquire the ranging result of the third UE; and send a first response message including rejection indication information to the first UE. The rejection indication information is used to indicate suspension of establishing the direct connection communication.

According to an eighth aspect of the embodiments of the present disclosure, an information processing apparatus is provided, including: a third receiving module, configured to receive a second request message sent by a second UE.

The second request message includes: the second identification information, the first identification information, the third identification information, and the ranging service code for indicating the request ranging service. The second request message is used to request permission for the first UE to acquire the ranging result of the third UE.

The second request message is sent by the second UE after receiving the first request message. The first request message is used to request establishment of a direct communication connection between the first UE and the second UE.

In some embodiments, the first request message includes: the first identification information, the second identification information, the ranging service code, and the third identification information of the third UE for requesting the ranging result.

In some embodiments, the apparatus includes: a third sending module, configured to send the second request message to the third network node; and a third receiving module, configured to receive the second response message sent by the third network node. The second response message is used to indicate whether the first UE is authorized to acquire the ranging result of the third UE.

In some embodiments, the apparatus includes: a third sending module, configured to send the second request message to the second network node; and a third receiving module, configured to receive the second response message sent by the second network node. The second response message is used to indicate whether the first UE is authorized to acquire the ranging result of the third UE.

In some embodiments, the third sending module is configured to send the second response message to the second UE.

In some embodiments, the second response message is determined by the third network node, or the third response message is acquired by the third network node from the second network node.

In some embodiments, the third network node is the PKMF of the first UE or the PCF of the first UE.

In some embodiments, the first network node is the PKMF of the second UE or the PCF of the second UE.

According to a ninth aspect of the embodiments of the present disclosure, an information processing apparatus is provided, including: a fourth receiving module, configured to receive a second request message sent by a first network node or a third network node.

The second request message includes: the second identification information, the first identification information, the third identification information, and the ranging service code for indicating a request ranging service. The second request message is used to request permission for the first UE to acquire the ranging result of the third UE.

The second request message is sent by the second UE after receiving the first request message. The first request message is used to request establishment of a direct communication connection between the first UE and the second UE.

In some embodiments, the first request message includes: the first identification information, the second identification information, the ranging service code, and the third identification information of the third UE for requesting the ranging result.

In some embodiments, the apparatus includes: a fourth sending module, configured to send a second response message to the first network node or the third network node. The second response message is used to indicate whether the first UE is authorized to acquire the ranging result of the third UE.

According to a tenth aspect of the embodiments of the present disclosure, an information processing apparatus is provided, including: a fifth receiving module, configured to receive a second request message sent by a first network node.

The second request message includes: the second identification information, the first identification information, the third identification information, and the ranging service code for indicating a request ranging service. The second request message is used to request permission for the first UE to acquire the ranging result of the third UE.

The second request message is sent by the second UE after receiving the first request message. The first request message is used to request establishment of a direct communication connection between the first UE and the second UE.

In some embodiments, the first request message includes: the first identification information, the second identification information, the ranging service code, and the third identification information of the third UE for requesting the ranging result.

In some embodiments, the apparatus includes: a processing module, configured to acquire a second response message, where the second response message is used to indicate whether the first UE is authorized to acquire the ranging result of the third UE; and a fifth sending module, configured to send the second response message to the first network node.

In some embodiments, the processing module is configured to determine the second response message based on the second request message.

In some embodiments, the fifth sending module is configured to send the second request message to the second network node.

The fifth receiving module is configured to receive the second response message sent by the second network node.

In some embodiments, the second network node is a ranging positioning server.

Furthremore or alternatively, the first network node is a ProSe Key Management Function (PKMF) of the second UE or a Policy Control Function (PCF) of the second UE.

Furthremore or alternatively, the third network node is a ProSe Key Management Function (PKMF) of the first UE or a Policy Control Function (PCF) of the first UE.

According to a ninth aspect of the embodiments of the present disclosure, a communication device is provided. The communication device includes: a processor; and a memory for storing executable instructions of the processor.

The processor is configured to implement the information processing method according to any embodiment of the present disclosure when running the executable instructions.

According to a tenth aspect of the embodiments of the present disclosure, a computer storage medium is provided. The computer storage medium has a computer executable program stored thereon. The computer executable program implements the information processing method according to any embodiment of the present disclosure when executed by a processor.

The technical solution provided by the embodiments of the present disclosure may include the following beneficial effects.

In the embodiments of the present disclosure, a first request message may be sent to a second UE by a first UE. The first request message includes the first identification information of the first UE and the second identification information of the second UE. The first request message is used to request establishment of a direct connection communication. The first request message further includes: the third identification information of the third UE for requesting the ranging result, and the ranging service code for indicating the request ranging service. In this way, during the process of establishing the direct connection communication, the second UE can detect whether the first UE is permitted to acquire the ranging result of the third UE, so that the ranging result of the third UE is acquired only when the first UE is permitted to call the second UE to assist in acquiring the ranging result of the third UE. In this way, the risk can be reduced of the first UE, which is not permitted, acquiring the ranging result of the third UE because it can establish a direct connection communication with the second UE.

It should be understood that the above general description and the detailed description below are only examples and explanatory, and cannot limit the embodiments of the present disclosure.

### BRIEF DESCRIPTION OF THE DRAWINGS

Fig. 1 is a schematic structural diagram of a wireless communication system according to an example embodiment.
Fig. 2 is a schematic diagram of communications between a third-party UE, an assistant UE, and a measured UE according to an example embodiment.
Fig. 3 is a schematic diagram of an information processing method according to an example embodiment.
Fig. 4 is a schematic diagram of an information processing method according to an example embodiment.
Fig. 5 is a schematic diagram of an information processing method according to an example embodiment.
Fig. 6 is a schematic diagram of an information processing method according to an example embodiment.
Fig. 7 is a schematic diagram of an information processing method according to an example embodiment.
Fig. 8 is a schematic diagram of an information processing method according to an example embodiment.
Fig. 9 is a schematic diagram of an information processing method according to an example embodiment.
Fig. 10 is a block diagram of an information processing apparatus according to an example embodiment.
Fig. 11 is a block diagram of an information processing apparatus according to an example embodiment.
Fig. 12 is a block diagram of an information processing apparatus according to an example embodiment.
Fig. 13 is a block diagram of an information processing apparatus according to an example embodiment.
Fig. 14 is a block diagram of an information processing apparatus according to an example embodiment.
Fig. 15 is a block diagram of a UE according to an example embodiment.
Fig. 16 is a block diagram of a base station according to an example embodiment.

### DETAILED DESCRIPTION OF THE EMBODIMENTS

Here, example embodiments will be described in detail, instances of which are shown in the accompanying drawings. When the following description refers to the drawings, unless otherwise indicated, the same numbers in different drawings represent the same or similar elements. The embodiments described in the following example embodiments do not represent all the embodiments consistent with the embodiments of the present disclosure. Instead, they are only examples of apparatus and methods consistent with some aspects of the embodiments of the present disclosure as detailed in the attached claims.

The terms used in the embodiments of the present disclosure are only for the purpose of describing specific embodiments and are not intended to limit the embodiments of the present disclosure. The singular forms "one" and "the" used in the embodiments of the present disclosure and the attached claims are also intended to include the plural forms, unless the context clearly indicates other meanings. It should also be understood that the term "and/or" used herein refers to and includes any or all possible combinations of one or more associated items as listed.

It should be understood that although the terms first, second, third, etc. may be used in the embodiments of the present disclosure to describe various information, these information should not be limited to these terms. These terms are only used to distinguish the same type of information from each other. For example, without departing from the scope of the embodiments of the present disclosure, the first information may also be referred to as the second information, and similarly, the second information may also be referred to as the first information. Depending on the context, the word "if" as used herein may be interpreted as "at the time of" or "when" or "in response to determination".

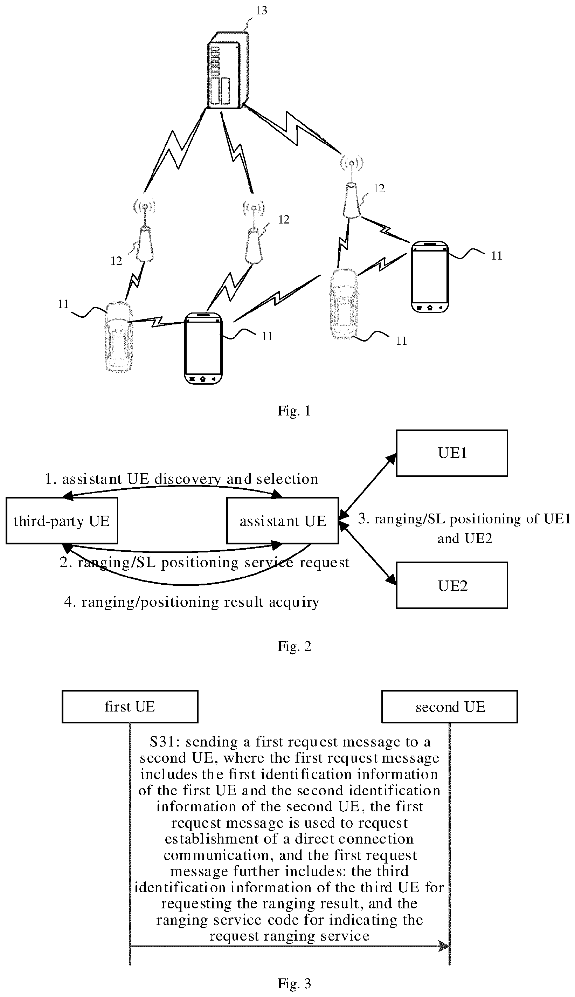

Reference may be made to Fig. 1, which shows a schematic structural diagram of a wireless communication system provided by an embodiment of the present disclosure. As shown in Fig. 1, the wireless communication system is a communication system based on cellular mobile communication technology, and the wireless communication system may include: a number of user equipments 110 and a number of base stations 120.

The user equipment 110 may be a device that provides voice and/or data connectivity to a user. The user equipment 110 may communicate with one or more core networks via a Radio Access Network (RAN). The user equipment 110 may be an Internet of Things user device, such as a sensor device, a mobile phone (or a "cellular" phone), and a computer with an Internet of Things user device, for example, a fixed, portable, pocket-sized, handheld, computer-built-in, or vehicle-mounted device. For example, it may be a station (STA), subscriber unit, subscriber station, mobile station, mobile, remote station, access point, remote terminal, access terminal, user terminal, user agent, user device, or user equipment. Alternatively, the user equipment 110 may also be a device of an unmanned aerial vehicle. Alternatively, the user equipment 110 may also be a vehicle-mounted device, such as a driving computer with wireless communication function, or a wireless user device connected to an external driving computer. Alternatively, the user equipment 110 may also be a roadside device, such as a street lamp, signal lamp, or other roadside device with a wireless communication function.

The base station 120 may be a network-side device in a wireless communication system. The wireless communication system may be the 4th generation mobile communication (4G) system, also known as a Long Term Evolution (LTE) system. Alternatively, the wireless communication system may be a 5G system, also known as a new air interface system or a 5G NR system. Alternatively, the wireless communication system may be a next generation system of the 5G system. The access network in the 5G system may be referred to as a New Generation-Radio Access Network (NG-RAN).

The base station 120 may be an evolved base station (eNB) used in a 4G system. Alternatively, the base station 120 may also be a base station (gNB) using a centralized distributed architecture in a 5G system. When the base station 120 uses a centralized distributed architecture, it generally includes a Centralized Unit (CU) and at least two Distributed Units (DUs). The centralized unit is provided with a Packet Data Convergence Protocol (PDCP) layer, a Radio Link Control (RLC) layer, and a Medium Access Control (MAC) layer. The distributed unit is provided with a physical (PHY) layer protocol stack. The specific implementations of the base station 120 are not limited in the embodiments of the present disclosure.

A wireless connection may be established between the base station 120 and the user equipment 110 through a wireless air interface. In different implementations, the wireless air interface is a wireless air interface based on the 4th generation mobile communication network technology (4G) standard. Alternatively, the wireless air interface is a wireless air interface based on the fifth generation mobile communication network technology (5G) standard. For example, the wireless air interface is a new air interface. Alternatively, the wireless air interface may also be a wireless air interface based on the next generation mobile communication network technology standard of 5G.

In some embodiments, an End to End (E2E) connection may also be established between the user equipments 110, such as the vehicle to vehicle (V2V) communication, vehicle to infrastructure (V2I) communication, and vehicle to pedestrian (V2P) communication in the vehicle to everything (V2X) communication.

Here, the user equipment may be considered as the terminal equipment in the following embodiments.

In some embodiments, the wireless communication system may also include a network management device 130.

Several base stations 120 are respectively connected to the network management device 130. The network management device 130 may be a core network device in the wireless communication system. For example, the network management device 130 may be a Mobility Management Entity (MME) in the Evolved Packet Core (EPC). Alternatively, the network management device may also be other core network devices, such as a Serving GateWay (SGW), a Public Data Network GateWay (PGW), a Policy and Charging Rules Function (PCRF), or a Home Subscriber Server (HSS). The embodiments of the present disclosure are not limited in the implementation forms of the network management device 130.

In order to facilitate the understanding by those skilled in the art, the embodiments of the present disclosure list multiple implementations to clearly illustrate the technical solutions in the embodiments of the present disclosure. Apparently, those skilled in the art can understand that the multiple implementations provided by the embodiments of the present disclosure may be executed separately, or may be executed together with the methods of other implementations in the embodiments of the present disclosure, or may be executed separately or in combination with some implementations in other related technologies. The embodiments of the present disclosure are not limited in this regard.

It should be noted that when multiple execution subjects are involved in the embodiments of the present disclosure, and one execution subject sends a certain transmission to another execution subject, this may indicate that the one execution subject sends the transmission directly to the other execution subject, or the one execution subject sends the transmission to the other execution subject through any other device. The embodiments of the present disclosure are not limited in this regard.

In order to better understand the technical solutions described in any embodiment of the present disclosure, first, some explanations are given to the related technologies.

As shown in Fig. 2, the third-party UE may perform mutual discovery based on SL with the assistant UE, and request the assistant UE to help measuring the distance between UE1 and UE2. Generally, since the third-party UE and the assistant UE have completed mutual discovery and SL has been established, the third-party UE is a UE trusted by the assistant UE. When the assistant UE receives a request from a third-party UE to assist in measuring the distance between UE1 and UE2, it is also necessary to ascertain whether the third-party UE is authorized to measure the distance between UE1 and UE2.

In some application scenarios, the assistant UE broadcasts announcement information, which includes assistant UE information, role indication (i.e., "assistant UE"), ranging service code, and ranging exposure information. The ranging exposure information includes a list of target UE information. Using this list, the assistant UE may perform ranging/SL positioning. The third-party UE monitors the announcement information and discovers the assistant UE based on the received ranging exposure information. If the target UE for which the third-party UE intends to request the ranging result falls in the target UE information list in the ranging exposure information, the third-party UE selects the discovered assistant UE, and then the third-party UE establishes a secure PC5 connection with the assistant UE.

Assuming that the security establishment process for 5G ProSe direction communication defined in the related art may be reused for ranging the PC5 direct communication, the current security mechanism can only ensure that the third-party UE is permitted to call the ranging service with the assistant UE. However, according to the current specification, there is no existing method for the assistant UE to check whether the third-party UE is permitted to request the ranging result of the target UE. Therefore, in the case that a misbehaving third-party UE, which is not permitted to request the ranging results of UE1 and UE2, responds to the broadcast message from the assistant UE announcing UE1 and UE2, the third-party UE can then establish a PC5 connection with the assistant UE. Even if the third-party UE is authenticated and authorized during establishment of the PC5 connection, the current security mechanism cannot prevent the misbehaving third-party UE from requesting the ranging result of UE1/UE2.

As shown in Fig. 3, an embodiment of the present disclosure provides an information processing method, which is performed by a first UE, and includes step S31.

Step S31: sending a first request message to a second UE. The first request message includes the first identification information of the first UE and the second identification information of the second UE. The first request message is used to request establishment of a direct connection communication. The first request message further includes: the third identification information of the third UE for requesting the ranging result, and the ranging service code for indicating the request ranging service.

Here, the first UE may be a third-party UE, the second UE may be an assistant UE, and the third UE may be a measured UE or a target UE. The assistant UE may be any UE that can perform ranging/SL positioning with a third UE (such as UE1 and UE2 in the above embodiment(s)). For example, the assistant UE may find and measure UE1 and UE2 respectively based on SL. The third-party UE may be any UE other than the assistant UE and the measured UE.

Here, the first UE, the second UE, and the third UE may all be various mobile terminals or fixed terminals. For example, the UE may be, but not limited to, a mobile phone, a computer, a server, a wearable device, a vehicle terminal, a Road Side Unit (RSU), a game control platform, or a multimedia device, etc.

Here, the first identification information, the second identification information, and the third identification information may all be the information for uniquely identifying the UE. For example, the first identification information, the second identification information, and the third identification information may all be, but not limited to, one of the following: a network layer identification or an application layer identification. The network layer identification may be, but not be, a Subscription Concealed Identifier (SUCI) or a Globally Unique Temporary UE Identity (GUTI). For another example, the first identification information, the second identification information, and the third identification information may all be, but not limited to, the physical address of the UE. For another example, the first identification information, the second identification information, and the third identification information may be, but are not limited to, codes or indices negotiated between the operator and the UE or between the network device and the UE.

In an embodiment, the ranging service may be a ranging/sidelink (SL) positioning service. Here, the first request message includes: the third identification information of the third UE for requesting the ranging result of the ranging/sidelink positioning service, and the Ranging Service Code (RSC) for indicating the request ranging/sidelink positioning service.

In an embodiment, the first request message may be ranging/sidelink positioning request message.

In an embodiment, the first UE sends the first request message to the second UE, so that the second UE sends the second request message to the first network node or the second network node.

Here, the second request message includes: the second identification information, the first identification information, the third identification information, and the ranging service code. The second request message is used to request permission for the first UE to acquire the ranging result of the third UE. Here, the second request message is used to request permission for the first UE to acquire the ranging result of the third UE. This may be that the second request message is used to request the permission so that the first UE can acquire the ranging result of the third UE.

In an embodiment, the second request message may be used to request the permission for the first UE to acquire the ranging result of the third UE in the ranging service indicated by the ranging service code. The ranging service may be a ranging/sidelink positioning service, or the ranging service may be other ranging services, which are not limited here.

Here, the first network node, the second network node, and the third network node involved below may all be logical nodes or functions or entities flexibly deployed in the communication network. For example, the first network node, the second network node, and the third network node are logical nodes or functions at the core network side.

In an embodiment, the first network node may be the PKMF of the second UE or the PCF of the second UE. For example, the first network node is the PKMF of the assistant UE or the PCF of the assistant UE.

In an embodiment, the second network node may be a ranging positioning server. For example, the second network node is a ranging/sidelink positioning server.

In an embodiment, the third network node may be the PKMF of the first UE or the PCF of the first UE. For example, the third network node is the PKMF of the third-party UE or the PCF of the third-party UE.

In an embodiment, the second request message may be an authorization request message. Accordingly, the second response message involved below may be an authorization response message.

In an embodiment of the present disclosure, a first request message may be sent to a second UE by a first UE. The first request message includes the first identification information of the first UE and the second identification information of the second UE. The first request message is used to request establishment of a direct connection communication. The first request message also includes: the third identification information of the third UE for requesting the ranging result, and the ranging service code for indicating the request ranging service. In this way, during the process of establishing the direct connection communication, the second UE can detect whether the first UE is permitted to acquire the ranging result of the third UE, so that the ranging result of the third UE is acquired only when the first UE is permitted to call the second UE to assist in acquiring the ranging result of the third UE. In this way, the risk can be reduced of the first UE, which is not permitted and/or behaves improperly, acquiring the ranging result of the third UE because it can establish a direct connection communication with the second UE.

For example, during the process of direct connection communication, the assistant UE may detect whether the third party UE is permitted to acquire the ranging result of the measured UE or the target UE. The risk can be reduced of the third party UE, which is not authorized to acquire the ranging result of the measured UE or the target UE, acquiring the ranging result of the measured UE or the target UE.

In some embodiments, before step S31, the announcement information sent by the second UE is received.

In step S31, sending the first request message to the second UE, includes: decrypting the announcement information sent by the second UE based on the key information to acquire the first information, and sending the first request message to the second UE.

The first information includes at least one of the following:
the second identification information of the second UE;
role indication information, used to indicate the role of the second UE;
ranging service code; or
the third identification information of the third UE.

An embodiment of the present disclosure provides an information processing method, which is performed by the first UE, and includes: decrypting the announcement information sent by the second UE based on the key information to acquire the first information, and sending the first request message to the second UE.

The first information includes at least one of the following:
the second identification information of the second UE;
role indication information, used to indicate the role of the second UE;
ranging service code; or
the third identification information of the third UE.

In this way, in an embodiment of the present disclosure, under the premise that the second UE and the first UE discover each other, the first UE can request establishment of a direct communication connection with the second UE, and the second UE can check whether the first UE is authorized to acquire the ranging result of the third UE.

It should be noted, those skilled in the art can understand that the methods provided in the embodiments of the present disclosure may be executed alone or together with some methods in the embodiments of the present disclosure or some methods in the related technology.

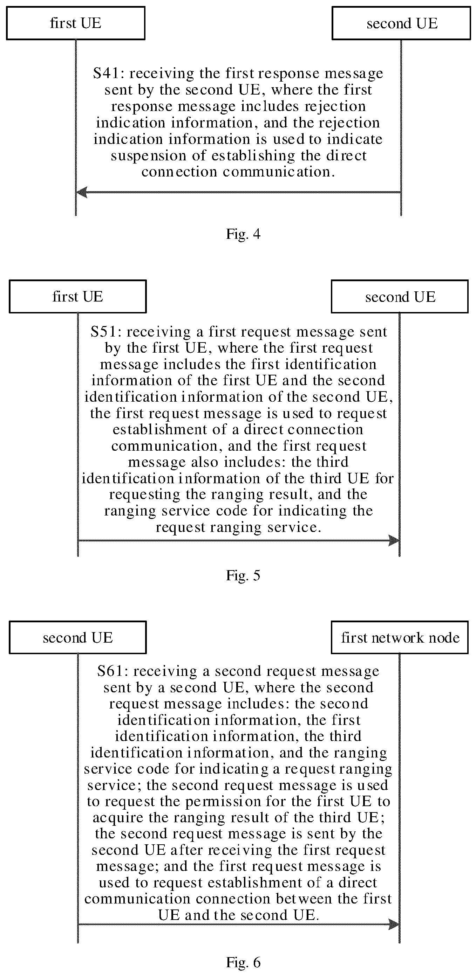

As shown in Fig. 4, an embodiment of the present disclosure provides an information processing method, which is performed by the first UE, and includes step S41.

Step S41: receiving the first response message sent by the second UE. The first response message includes rejection indication information. The rejection indication information is used to indicate suspension of establishing the direct connection communication.

Here, the first response message carrying the rejection indication information is sent by the second UE after determining that the authorization fails. Here, the authorization failure means that the first UE is not authorized to acquire the ranging result of the third UE.

In an embodiment, the first response message includes the cause of failure.

An embodiment of the present disclosure provides an information processing method, which is performed by the first UE, and includes: receiving the first response message sent by the second UE. The first response message includes the cause of failure.

Thus, in an embodiment of the present disclosure, the second UE may suspend establishing the direct communication connection when it is determined that the first UE is not authorized to acquire the ranging result of the third UE, and inform the first UE to suspend establishing the direct connection communication by returning the first response message carrying the rejection indication information.

It should be noted, those skilled in the art can understand that the methods provided in the embodiments of the present disclosure may be executed alone or together with some methods in the embodiments of the present disclosure or some methods in the related technology.

An embodiment of the present disclosure provides an information processing method, which is performed by a first UE, and includes: receiving a first response message sent by a second UE. The first response message includes success indication information. The success indication information is used to indicate the successful establishment of the direct connection communication.

Thus, in an embodiment of the present disclosure, when the second UE determines that the first UE is authorized to acquire the ranging result of the third UE, it can inform the first UE to establish the direct connection communication by returning the first response message carrying the success indication information.

An embodiment of the present disclosure provides an information processing method, which is performed by a first UE, and includes:
receiving a security mode command message sent by a second UE, where the security mode command message is used to indicate establishment of a security context; and
sending a security mode completion message to the second UE, where the security mode completion message is used to indicate the completion of the establishment of the security context.

An embodiment of the present disclosure provides an information processing method, which is performed by a first UE, and includes: receiving the ranging result of the third UE sent by the second UE.

Thus, in an embodiment of the present disclosure, when the second UE determines that the first UE is authorized to acquire the ranging result of the third UE, a secure direct connection communication may be established, and the ranging result of the third UE may be transmitted to the first UE.

It should be noted, those skilled in the art can understand that the methods provided in the embodiments of the present disclosure may be executed alone or together with some methods in the embodiments of the present disclosure or some methods in the related technology.

The following information processing method is performed by the second UE, which is similar to the description of the information processing method performed by the first UE. For the technical details not disclosed in the embodiment(s) of the information processing method performed by the second UE, reference may be made the description of the example(s) of the information processing method performed by the first UE, which is not described in detail here.

As shown in Fig. 5, an embodiment of the present disclosure provides an information processing method, which is performed by the second UE, and includes step S51.

Step S51: receiving a first request message sent by the first UE. The first request message includes the first identification information of the first UE and the second identification information of the second UE. The first request message is used to request establishment of a direct connection communication. The first request message also includes: the third identification information of the third UE for requesting the ranging result, and the ranging service code for indicating the request ranging service.

In some embodiments of the present disclosure, the first UE, the second UE, and the third UE may be the first UE, the second UE, and the third UE in the above-mentioned embodiment(s), respectively. The first identification information, the second identification information, and the third identification information are the first identification information, the second identification information, and the third identification information in the above-mentioned embodiment(s), respectively. The first request message, the ranging service, and the ranging service code may be the first request message, the ranging service, and the ranging service code in the above-mentioned embodiment(s).

For example, the first UE may be a third-party UE, the second UE may be an assistant UE, and the third UE may be a measured UE or a target UE.

For example, the first request message may be a ranging/sidelink positioning request message.

For example, the ranging service may be a ranging/sidelink positioning service. Here, the first request message includes: the third identification information of the third UE for requesting the ranging result of the ranging/sidelink positioning service, and the ranging service code for indicating the request ranging/sidelink positioning service.

It should be noted, those skilled in the art can understand that the methods provided in the embodiments of the present disclosure may be executed alone or together with some methods in the embodiments of the present disclosure or some methods in the related technology.

An embodiment of the present disclosure provides an information processing method, which is performed by the second UE, and includes: sending a second request message to the first network node. The second request message includes: the second identification information, the first identification information, the third identification information, and the ranging service code. The second request message is used to request permission for the first UE to acquire the ranging result of the third UE.

In some embodiments of the present disclosure, the second request message may be the second request message in the above embodiment(s).

For example, the second request message is used to request the first UE to acquire the ranging result of the third UE.

For example, the second request message may be used to request the permission for the first UE to acquire the ranging result of the third UE in the ranging service indicated by the ranging service code.

In an embodiment, the first network node is a PKMF or a PCF of the second UE.

Here, the second request message is used for being sent by the first network node to the third network node.

An embodiment of the present disclosure provides an information processing method, which is performed by the second UE, and includes: receiving a second response message sent by the first network node. The second response message is used to indicate whether the first UE is authorized to acquire the ranging result of the third UE.

In this way, the second request message may be forwarded by the first network node and the second response message may be received to acquire the authorization about whether the first UE is permitted to acquire the ranging result of the third UE.

An embodiment of the present disclosure provides an information processing method, which is performed by the second UE, and includes: sending a second request message to the second network node. The second request message includes: the second identification information, the first identification information, the third identification information, and the ranging service code. The second request message is used to request permission for the first UE to acquire the ranging result of the third UE.

In an embodiment, the second UE sending the second request message to the second network node, includes: the second UE sending the second request message to the first network node, and the first network node sending the second request message to the second network node.

In an embodiment, the second network node is a ranging positioning server. For example, the second network node may be a ranging/sidelink positioning server.

An embodiment of the present disclosure provides an information processing method, which is performed by a second UE, and includes: receiving a second response message sent by a second network node. The second response message is used to indicate whether the first UE is authorized to acquire the ranging result of the third UE.

In this way, the second UE can directly send a second request message to the second network node and receive a second response message to acquire the authorization about whether the first UE is permitted to acquire the ranging result of the third UE.

An embodiment of the present disclosure provides an information processing method, which is performed by a second UE, and includes: determining, based on the second response message, that the first UE is authorized to acquire the ranging result of the third UE; and sending a first response message including success indication information to the first UE. The success indication information is used to indicate a successful establishment of the direct connection communication.

An embodiment of the present disclosure provides an information processing method, which is performed by a second UE, and includes: determining, based on the second response message, that the first UE is not authorized to acquire the ranging result of the third UE; and sending a first response message including rejection indication information to the first UE. The rejection indication information is used to indicate suspension of establishing the direct connection communication.

In this way, the second UE can determine whether to execute a direct security mode command or suspend the direct communication establishment process based on the authorization result. For example, if the authorization is successful, that is, the first UE is authorized to acquire the ranging result of the third UE, it is determined to establish a communication connection with the first UE and/or execute a security mode command. For another example, if the authorization fails, that is, the first UE is not authorized to acquire the ranging result of the third UE, it is determined to suspend the process of establishing direct communication with the first UE.

It should be noted, those skilled in the art can understand that the methods provided in the embodiments of the present disclosure may be executed alone or together with some methods in the embodiments of the present disclosure or some methods in the related technology.

An embodiment of the present disclosure provides an information processing method, which is performed by the second UE, and includes: sending security mode command information to the first UE, where the security mode command information is used to indicate establishment of a security context; and receiving security mode completion information sent by the first UE, where the security mode completion information is used to indicate the completion of establishing the security context.

An embodiment of the present disclosure provides an information processing method, which is performed by the second UE, and includes:
acquiring the ranging result of the third UE; and
sending the ranging result of the third UE to the first UE.

An embodiment of the present disclosure provides an information processing method, which is performed by the second UE, and includes: broadcasting announcement information. The announcement information is information acquired by encrypting the first information using key information. The first information includes at least one of the following:
the second identification information of the second UE;
role indication information, used to indicate the role of the second UE;
ranging service code; or
the third identification information of the third UE.

For the above implementation(s), reference may be made to the description at the first UE side, which will not be repeated here.

It should be noted, those skilled in the art can understand that the methods provided by the embodiments of the present disclosure may be executed alone or together with some methods in the embodiments of the present disclosure or some methods in the related technology.

The following information processing method is performed by the first network node and is similar to the description of the information processing method performed by the first UE and/or the second UE. For the technical details not disclosed in the embodiments of the information processing method performed by the first network node, reference may be made to the description of the example(s) of the information processing method performed by the first UE and/or the second UE, which will not be described in detail here.

As shown in Fig. 6, an embodiment of the present disclosure provides an information processing method, which is performed by a first network node, and includes step S61.

Step S61: receiving a second request message sent by a second UE. The second request message includes: the second identification information, the first identification information, the third identification information, and the ranging service code for indicating a request ranging service. The second request message is used to request the permission for the first UE to acquire the ranging result of the third UE. The second request message is sent by the second UE after receiving the first request message. The first request message is used to request establishment of a direct communication connection between the first UE and the second UE.

In some embodiments, the first request message includes: the first identification information, the second identification information, the ranging service code, and the third identification information of the third UE for requesting the ranging result.

In some embodiments of the present disclosure, the first UE, the second UE, and the third UE may be the first UE, the second UE, and the third UE in the above-mentioned embodiment(s), respectively. The first identification information, the second identification information, and the third identification information may be the first identification information, the second identification information, and the third identification information in the above-mentioned embodiment(s), respectively. The first request message, the ranging service, and the ranging service code may all be the first request message, the ranging service, and the ranging service code in the above-mentioned embodiment(s).

For example, the first UE may be a third-party UE, the second UE may be an assistant UE, and the third UE may be a measured UE or a target UE.

For example, the first request message may be a ranging/sidelink positioning request message.

For example, the ranging service may be a ranging/sidelink positioning service. Here, the first request message includes: the third identification information of the third UE for requesting the ranging result of the ranging/sidelink positioning service, and the ranging service code for indicating the request ranging/sidelink positioning service.

In some embodiments of the present disclosure, the second request message may be the second request message in the above-mentioned embodiment(s).

For example, the second request message is used to request the permission for the first UE to acquire the ranging result of the third UE.

For example, the second request message may be used to request the permission for the first UE to acquire the ranging result of the third UE in the ranging service indicated by the ranging service code.

In an embodiment, the first network node is a PKMF or a PCF of the second UE.

An embodiment of the present disclosure provides an information processing method, which is performed by a first network node, and includes:
sending a second request message to a third network node; and
receiving a second response message sent by the third network node, where the second response message is used to indicate whether the first UE is authorized to acquire the ranging result of the third UE.

An embodiment of the present disclosure provides an information processing method, which is performed by a first network node, and includes: sending a second response message to a second UE.

In an embodiment, the second response message is determined by the third network node, or the third response message is acquired by the third network node from the second network node.

In an embodiment, the third network node is the PKMF of the first UE or the PCF of the first UE.

An embodiment of the present disclosure provides an information processing method, which is performed by a first network node, and includes:
sending a second request message to a second network node; and
receiving a second response message sent by the second network node, where the second response message is used to indicate whether the first UE is authorized to acquire the ranging result of the third UE.

In an embodiment, the second network node is a ranging positioning server.

For the above implementation(s), reference may be made to the description of the first UE and/or the second UE side, which will not be repeated here.

It should be noted, those skilled in the art can understand that the methods provided in the embodiments of the present disclosure may be executed alone or together with some methods in the embodiments of the present disclosure or some methods in the related technology.

The following information processing method is performed by the second network node, which is similar to the description of the information processing method performed by the first UE and/or the second UE and/or the first network node. For the technical details not disclosed in the embodiment(s) of the information processing method performed by the second network node, reference may be made to the description of the embodiment(s) of the information processing method performed by the first UE and/or the second UE and/or the first network node, which will not be described in detail here.

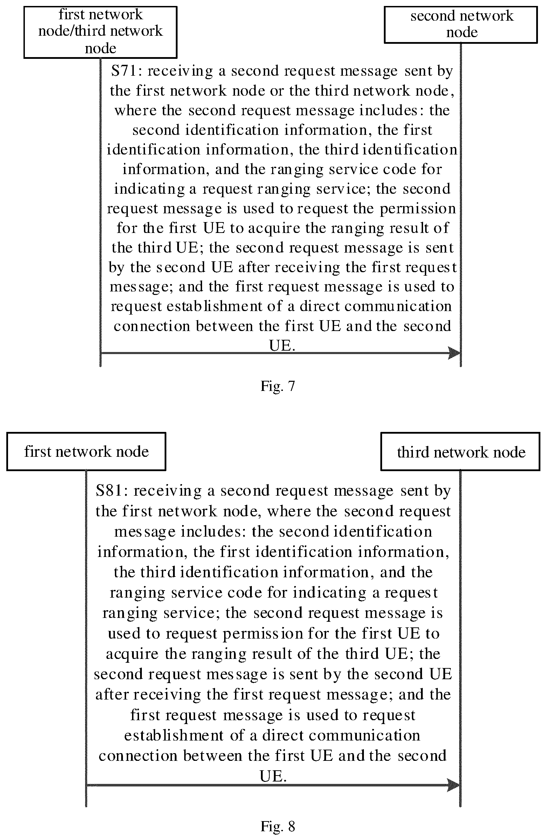

As shown in Fig. 7, an embodiment of the present disclosure provides an information processing method, which is performed by the second network node, and includes step S71.

Step S71: receiving a second request message sent by the first network node or the third network node. The second request message includes: the second identification information, the first identification information, the third identification information, and the ranging service code for indicating a request ranging service. The second request message is used to request the permission for the first UE to acquire the ranging result of the third UE. The second request message is sent by the second UE after receiving the first request message. The first request message is used to request establishment of a direct communication connection between the first UE and the second UE.

In some embodiments of the present disclosure, the second request message may be the second request message in the above embodiment(s).

For example, the second request message is used to request the permission for the first UE to acquire the ranging result of the third UE.

For example, the second request message may be used to request the permission for the first UE to acquire the ranging result of the third UE in the ranging service indicated by the ranging service code.

In an embodiment, the first network node is a PKMF or a PCF of the second UE.

In some embodiments of the present disclosure, the first request message may be the first request message in the above embodiment(s).

For example, the first request message includes: the first identification information, the second identification information, the ranging service code, and the third identification information of the third UE for requesting the ranging result.

In some embodiments of the present disclosure, the first UE, the second UE, and the third UE may be the first UE, the second UE, and the third UE in the above embodiment(s), respectively. The first identification information, the second identification information, and the third identification information may be the first identification information, the second identification information, and the third identification information in the above embodiment(s), respectively. The first request message, the ranging service, and the ranging service code may be the first request message, the ranging service, and the ranging service code in the above embodiment(s).

For example, the first UE may be a third-party UE, the second UE may be an assistant UE, and the third UE may be a measured UE or a target UE.

For example, the first request message may be ranging/sidelink positioning request message.

For example, the ranging service may be a ranging/sidelink positioning service. Here, the first request message includes: the third identification information of the third UE for requesting the ranging result of the ranging/sidelink positioning service, and the ranging service code for indicating the request ranging/sidelink positioning service.

An embodiment of the present disclosure provides an information processing method, which is performed by the second network node, and includes: sending a second response message to the first network node or the third network node. The second response message is used to indicate whether the first UE is authorized to acquire the ranging result of the third UE.

For the above implementation(s), reference may be made to the description about the first UE and/or the second UE and/or the first network node, which will not be repeated here.

It should be noted, those skilled in the art can understand that the methods provided in the embodiments of the present disclosure may be executed alone or together with some methods in the embodiments of the present disclosure or some methods in the related technology.

The following is based on an information processing method, which is performed by a third network node and is similar to the description about the information processing method performed by the first UE and/or the second UE and/or the first network node and/or the second network node. For the technical details not disclosed in the embodiments of the information processing method performed by the third network node, reference may be made to the description of the embodiments of the information processing method performed by the first UE and/or the second UE and/or the first network node and/or the second network node, and no detailed description is given here.

As shown in Fig. 8, an embodiment of the present disclosure provides an information processing method, which is performed by a third network node, and includes step S81.

Step S81: receiving a second request message sent by the first network node. The second request message includes: the second identification information, the first identification information, the third identification information, and the ranging service code for indicating a request ranging service. The second request message is used to request permission for the first UE to acquire the ranging result of the third UE. The second request message is sent by the second UE after receiving the first request message. The first request message is used to request establishment of a direct communication connection between the first UE and the second UE.

In some embodiments of the present disclosure, the second request message may be the second request message in the above embodiment(s).

For example, the second request message is used to request the permission for the first UE to acquire the ranging result of the third UE.

For example, the second request message may be used to request the permission for the first UE to acquire the ranging result of the third UE in the ranging service indicated by the ranging service code.

In some embodiments, the first request message includes: the first identification information, the second identification information, the ranging service code, and the third identification information of the third UE for requesting the ranging result.

In some embodiments of the present disclosure, the first UE, the second UE, and the third UE may be the first UE, the second UE, and the third UE in the above embodiment(s) respectively. The first identification information, the second identification information, and the third identification information are the first identification information, the second identification information, and the third identification information in the above embodiment(s) respectively. The first request message, the ranging service, and the ranging service code may all be the first request message, the ranging service, and the ranging service code in the above embodiment(s).

For example, the first UE may be a third-party UE, the second UE may be an assistant UE, and the third UE may be a measured UE or a target UE.

For example, the first request message may be a ranging/sidelink positioning request message.

For example, the ranging service may be a ranging/sidelink positioning service. Here, the first request message includes: the third identification information of the third UE for requesting the ranging result of the ranging/sidelink positioning service, and the ranging service code for indicating the request ranging/sidelink positioning service.

An embodiment of the present disclosure provides an information processing method, which is performed by a third network node, and includes:
acquiring the second response message, where the second response message is used to indicate whether the first UE is authorized to acquire the ranging result of the third UE; and
sending the second response message to the first network node.

In some embodiments, acquiring the second response message includes: determining the second response message based on the second request message.

An embodiment of the present disclosure provides an information processing method, which is performed by a third network node, and includes: determining the second response message based on the second request message.

In this way, when the third network node can authorize and authenticate the first UE to acquire the ranging result of the third UE in the second request message, the second response message after authorization can be determined based on the third network node.

In some embodiments, the method includes: sending the second request message to the second network node.

Acquring the second response message includes: receiving the second response message sent by the second network node.

An embodiment of the present disclosure provides an information processing method, which is performed by a third network node, and includes:
sending a second request message to a second network node; and
receiving a second response message sent by the second network node.

In this way, when the third network node cannot authorize and authenticate the first UE to acquire the ranging result of the third UE in the second request message, the second request message can be sent to the second network node to determine and acquire the authentication for the first UE to acquire the ranging result of the third UE. In this way, the authentication for the first UE to acquire the ranging result of the third UE can be determined in a variety of ways.

In an embodiment, the second network node is a ranging positioning server.

Furthermore or alternatively, the first network node is the PKMF of the second UE or the PCF of the second UE.

Furthermore or alternatively, the third network node is the PKMF of the first UE or the PCF of the first UE.

For the above implementation, reference may be made to the description of the first UE and/or the second UE and/or the first network node and/or the third network node, which will not be repeated here.

It should be noted, those skilled in the art can understand that the methods provided in the embodiments of the present disclosure may be executed alone or together with some methods in the embodiments of the present disclosure or some methods in the related technology.

To further explain the embodiments of the present disclosure, a specific implementation is provided below.

Assuming that the direct communication with the third-party UE uses the PC5 connection establishment process in 3GPP. In order to prevent the third-party UE from requesting the ranging result of the measured UE for which the third-party UE does not have permission, if the request includes the information of the target UE, the assistant UE should be able to check whether the third-party UE is authorized when receiving a direct communication request from the third-party UE. When the assistant UE itself lacks authorization information, it needs to request an authorization service that the network can provide. The network function that can authorize the third-party UE may be a network function that provides ranging exposure information to the UE earlier in the providing process of authorization service and information. Based on the authorization result provided by the network, the assistant UE then determines whether to continue with the secure establishment of the PC5 connection.

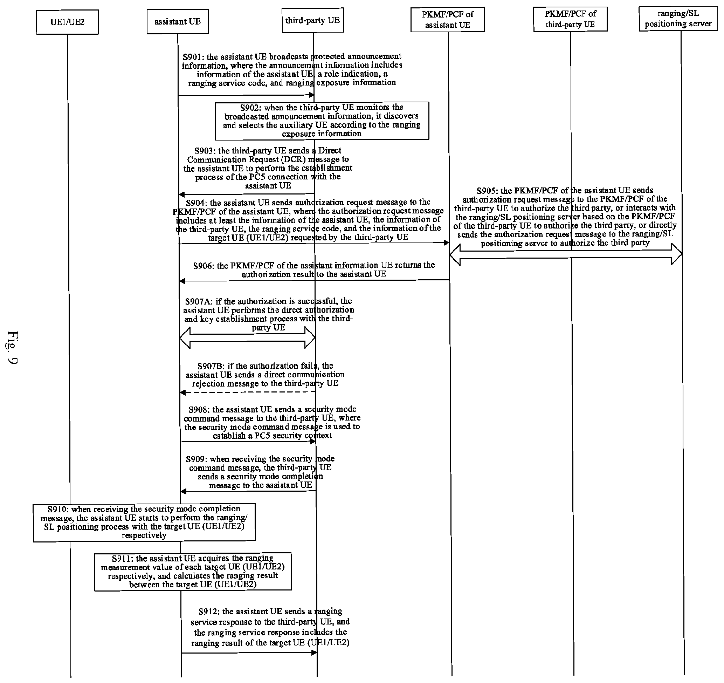

As shown in Fig. 9, an embodiment of the present disclosure provides an information processing method, which is performed by a communication device. The communication device includes: a measured UE or a target UE (e.g., UE1/UE2), an assistant UE, a third-party UE, a PKMF/PCF of the assistant UE, a PKMF/PCF of the third-party UE, and a ranging/SL positioning server. The information processing method includes the following steps.

Step S901: the assistant UE broadcasts protected announcement information. The announcement information includes information of the assistant UE, a role indication, a ranging service code, and ranging exposure information.

Here, the ranging exposure information may be a request message for requesting the ranging/positioning result, which includes a list of information of the measured UEs on which the assistant UE can perform ranging. The information list may include the ID of the measured UE, for example, the identifier (ID) of UE1 and/or UE2.

Step S902: when the third-party UE monitors the broadcasted announcement information, it discovers and selects the assistant UE according to the ranging exposure information.

Then, the third-party UE decodes the protected announcement information using the discovery security parameters received from its PKMF/PCF/DDNMF. Since the discovery security parameter is associated with the information of the measured UE in the ranging exposure information, only the discovery security parameter associated with the information of UE1/UE2 can decode the announcement information.

Step S903: the third-party UE sends a Direct Communication Request (DCR) message to the assistant UE to perform the establishment process of the PC5 connection with the assistant UE.

Here, the direct communication request message may be the first request message in the above embodiment(s). The direct communication request includes at least the information of the third-party UE, the information of the assistant UE, the ranging service code, and the information of the target UE (such as the information of UE1/UE2) for which the third-party UE requests the ranging result. Here, the information of the third-party UE, the information of the assistant UE, and the information of the target UE may respectively include at least: the first identification information of the third-party UE, the second identification information of the assistant UE, and the third identification information of the target UE.

It is worth noting, the risk is that the improperly behaved third-party UE that is not permitted to request the ranging result of UE1/UE2 can still respond to the broadcast message (such as the announcement message) from the assistant UE by sending a DCR for establishing a PC5 connection with the assistant UE, and the assistant UE declares its assistance to UE1/UE2, but the assistant UE cannot detect the improper behavior.

Step S904: the assistant UE sends authorization request message to the PKMF/PCF of the assistant UE. The authorization request message includes at least the information of the assistant UE, the information of the third-party UE, the ranging service code, and the information of the target UE (UE1/UE2) requested by the third-party UE.

Here, the authorization request message may be the second request message in the above embodiment(s).

Step S905: the PKMF/PCF of the assistant UE sends authorization request message to the PKMF/PCF of the third-party UE to authorize the third party, or interacts with the ranging/SL positioning server based on the PKMF/PCF of the third-party UE to authorize the third party, or directly sends the authorization request message to the ranging/SL positioning server to authorize the third party.

Here, authorizing the third party means that whether the third party is authorized and permitted to request the ranging result of the target UE (UE1/UE2). The authorization request message includes at least the information of the third-party UE, the information of the target UE (UE1/UE2) requested by the third-party UE, and the ranging service code. The ranging/SL positioning server returns the authorization result to the PKMF/PCF of the assistant UE directly or via the PKMF/PCF of the third-party UE.

Here, the authorization result may be carried in the authorization response message. The authorization response message may be the second response message in the above embodiment(s).

Step S906: the PKMF/PCF of the assistant information UE returns the authorization result to the assistant UE.

Step S907A: if the authorization is successful, the assistant UE performs the direct authorization and key establishment process with the third-party UE.

Here, the successful authorization means authorizing the third-party UE to acquire the ranging result of the target UE. The method goes to step S908 after step S907A.

Step S907B: if the authorization fails, the assistant UE sends a direct communication rejection message to the third-party UE.

Here, the direct communication rejection message may be the first response message carrying the rejection indication information in the above embodiment(s). The direct communication rejection message may include the failure reason. The following steps do not need to be performed after step S907B.

Step S908: the assistant UE sends a security mode command message to the third-party UE. The security mode command message is used to establish a PC5 security context.

Step S909: when receiving the security mode command message, the third-party UE sends a security mode completion message to the assistant UE.

Step S910: when receiving the security mode completion message, the assistant UE starts to perform the ranging/SL positioning process with the target UE (UE1/UE2) respectively.

Step S911: the assistant UE acquires the ranging measurement value of each target UE (UE1/UE2) respectively, and calculates the ranging result between the targets UE (UE1/UE2);

Step S912: the assistant UE sends a ranging service response to the third-party UE, and the ranging service response includes the ranging result of the target UE (UE1/UE2).

It should be noted, those skilled in the art can understand that the methods provided in the embodiments of the present disclosure may be executed alone or together with some methods in the embodiments of the present disclosure or some methods in the related technology.

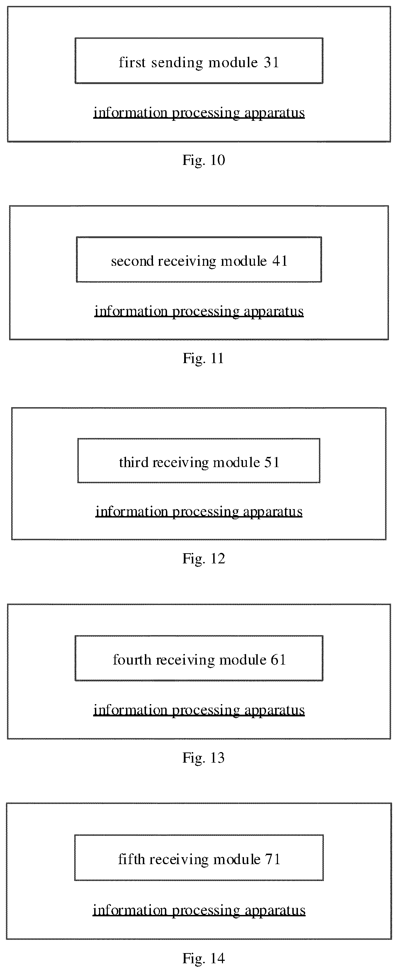

As shown in Fig. 10, an embodiment of the present disclosure provides an information processing apparatus, including a first sending module 31.

The first sending module 31 is configured to send a first request message to a second UE. The first request message includes the first identification information of the first UE and the second identification information of the second UE. The first request message is used to request establishment of a direct connection communication. The first request message also includes: the third identification information of the third UE for requesting the ranging result, and the ranging service code for indicating the request ranging service.

The information processing apparatus provided by an embodiment of the present disclosure includes a first UE.

An embodiment of the present disclosure provides an information processing apparatus, including: a first receiving module, configured to receive a first response message sent by a second UE. The first response message includes rejection indication information. The rejection indication information is used to indicate suspension of establishing a direct connection communication.

As shown in Fig. 11, an embodiment of the present disclosure provides an information processing apparatus, including a second receiving module 41.

The second receiving module 41 is configured to receive a first request message sent by a first UE. The first request message includes the first identification information of the first UE and the second identification information of the second UE. The first request message is used to request establishment of a direct connection communication. The first request message also includes: the third identification information of the third UE for requesting the ranging result, and the ranging service code for indicating the request ranging service.

The information processing apparatus provided by an embodiment of the present disclosure includes a second UE.

An embodiment of the present disclosure provides an information processing apparatus, including: a second sending module, configured to send a second request message to a first network node. The second request message includes: the second identification information, the first identification information, the third identification information, and the ranging service code. The second request message is used to request permission for the first UE to acquire the ranging result of the third UE.

In some embodiments, the first network node is the PKMF of the second UE or the PCF of the second UE.

An embodiment of the present disclosure provides an information processing apparatus, including: a second receiving module 41, configured to receive a second response message sent by the first network node. The second response message is used to indicate whether the first UE is authorized to acquire the ranging result of the third UE.

An embodiment of the present disclosure provides an information processing apparatus, including: a second sending module, configured to send a second request message to a second network node. The second request message includes: the second identification information, the first identification information, the third identification information, and the ranging service code. The second request message is used to request permission for the first UE to acquire the ranging result of the third UE.

In some embodiments, the second network node is a ranging positioning server.

An embodiment of the present disclosure provides an information processing apparatus, including: a second receiving module 41, configured to receive a second response message sent by the second network node. The second response message is used to indicate whether the first UE is authorized to acquire the ranging result of the third UE.

An embodiment of the present disclosure provides an information processing apparatus, including a second sending module, configured to: determine, based on the second response message, that the first UE is authorized to acquire the ranging result of the third UE; and send a first response message including success indication information to the first UE. The success indication information is used to indicate that the direct connection communication is successfully established.

Alternatively, the second sending module is configured to: determine, based on the second response message, that the first UE is not authorized to acquire the ranging result of the third UE; and send a first response message including rejection indication information to the first UE. The rejection indication information is used to indicate suspension of establishing the direct connection communication.

As shown in Fig. 12, an embodiment of the present disclosure provides an information processing apparatus, including a third receiving module 51.

The third receiving module 51 is configured to receive a second request message sent by a second UE. The second request message includes: the second identification information, the first identification information, the third identification information, and the ranging service code for indicating a request ranging service. The second request message is used to request permission for the first UE to acquire the ranging result of the third UE.

The second request message is sent by the second UE after receiving the first request message. The first request message is used to request establishment of a direct communication connection between the first UE and the second UE.

The information processing apparatus provided by an embodiment of the present disclosure includes a first network node.

In some embodiments, the first request message includes: the first identification information, the second identification information, the ranging service code, and the third identification information of the third UE for requesting the ranging result.

An embodiment of the present disclosure provides an information processing apparatus, including: a third sending module, configured to send a second request message to a third network node; and a third receiving module 51, configured to receive a second response message sent by the third network node. The second response message is used to indicate whether the first UE is authorized to acquire the ranging result of the third UE.

An embodiment of the present disclosure provides an information processing apparatus, including: a third sending module, configured to send a second request message to a second network node; and a third receiving module 51, configured to receive a second response message sent by the second network node. The second response message is used to indicate whether the first UE is authorized to acquire the ranging result of the third UE.

An embodiment of the present disclosure provides an information processing apparatus, including: a third sending module, configured to send a second response message to the second UE.

In some embodiments, the second response message is determined by the third network node, or the third response message is acquired by the third network node from the second network node.

In some embodiments, the third network node is the PKMF of the first UE or the PCF of the first UE.

In some embodiments, the first network node is the PKMF of the second UE or the PCF of the second UE.

As shown in Fig. 13, an embodiment of the present disclosure provides an information processing apparatus, including a fourth receiving module 61.

The fourth receiving module 61 is configured to receive a second request message sent by a first network node or a third network node. The second request message includes: the second identification information, the first identification information, the third identification information, and the ranging service code for indicating a request ranging service. The second request message is used to request permission for the first UE to acquire the ranging result of the third UE.

The second request message is sent by the second UE after receiving the first request message. The first request message is used to request establishment of a direct communication connection between the first UE and the second UE.

The information processing apparatus provided by an embodiment of the present disclosure includes a second network node.

In some embodiments, the first request message includes: the first identification information, the second identification information, the ranging service code, and the third identification information of the third UE for requesting the ranging result.

An embodiment of the present disclosure provides an information processing apparatus, including: a fourth sending module, configured to send a second response message to the first network node or the third network node. The second response message is used to indicate whether the first UE is authorized to acquire the ranging result of the third UE.

As shown in Fig. 14, an embodiment of the present disclosure provides an information processing apparatus, including a fifth receiving module 71.

The fifth receiving module 71 is configured to receive a second request message sent by a first network node. The second request message includes: the second identification information, the first identification information, the third identification information, and the ranging service code for indicating a request ranging service. The second request message is used to request permission for the first UE to acquire the ranging result of the third UE.

The second request message is sent by the second UE after receiving the first request message. The first request message is used to request establishment of a direct communication connection between the first UE and the second UE.

The information processing apparatus provided by an embodiment of the present disclosure includes a third network node.

In some embodiments, the first request message includes: the first identification information, the second identification information, the ranging service code, and the third identification information of the third UE for requesting the ranging result.

An embodiment of the present disclosure provides an information processing apparatus, including: a processing module, configured to acquire a second response message, where the second response message is used to indicate whether the first UE is authorized to acquire the ranging result of the third UE; and a fifth sending module 71, configured to send the second response message to the first network node.

An embodiment of the present disclosure provides an information processing apparatus, including: a processing module, configured to determine the second response message based on the second request message.

An embodiment of the present disclosure provides an information processing apparatus, including: a fifth sending module, configured to send the second request message to the second network node; and a fifth receiving module 71, configured to receive the second response message sent by the second network node.

In some embodiments, the second network node is a ranging positioning server.

Furthermore or alternatively, the first network node is a ProSe Key Management Function (PKMF) of the second UE or a Policy Control Function (PCF) of the second UE.

Furthermore or alternatively, the third network node is a ProSe Key Management Function (PKMF) of the first UE or a Policy Control Function (PCF) of the first UE.

It should be noted, those skilled in the art can understand that the apparatuses provided in the embodiments of the present disclosure may be executed alone or together with some apparatuses in the embodiments of the present disclosure or some apparatuses in the related technology.

Regarding the apparatus in the above embodiment(s), the specific implementations in which each module performs the operation has been described in detail in the method embodiments, and will not be elaborated here.

An embodiment of the present disclosure provides a communication device, including: a processor; and a memory for storing executable instructions of the processor.

The processor is configured to implement the information processing method in any embodiment of the present disclosure when running the executable instructions.

In an embodiment, the communication device may include, but is not limited to, at least one of: a first UE, a second UE, a first network node, a second network node, and a third network node. The processor may include various types of storage media, which are non-transistory computer storage media, and can continue to store information stored thereon after the user equipment is powered off.

The processor may be connected to the memory through a bus, etc., for reading an executable program stored on the memory, for example, at least one of the methods shown in Figs. 3 to 9.

An embodiment of the present disclosure also provides a computer storage medium, which stores a computer executable program. When the executable program is executed by a processor, the information processing method in any embodiment of the present disclosure is implemented, for example, at least one of the methods shown in Figs. 3 to 9.

Regarding the apparatus or storage medium in the above embodiment(s), the specific implementation in which each module performs the operation has been described in detail in the method embodiments, and will not be elaborated here.

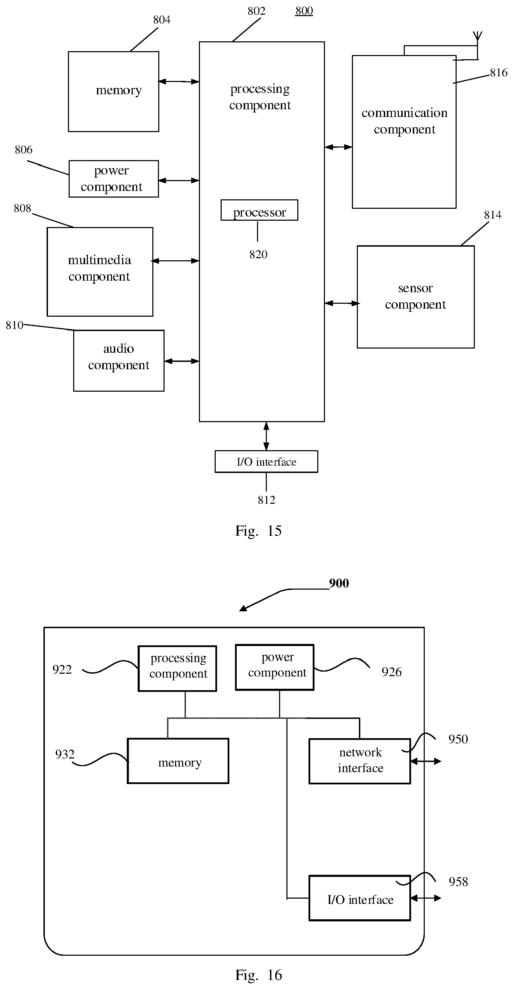

Fig. 15 is a block diagram of a user equipment 800 according to an example embodiment. For example, the user equipment 800 may be a mobile phone, a computer, a digital broadcast user device, a messaging device, a game console, a tablet device, a medical device, a fitness device, a personal digital assistant, etc.

Referring to Fig. 15, the user equipment 800 may include one or more of the following components: a processing component 802, a memory 804, a power component 806, a multimedia component 808, an audio component 810, an input/output (I/O) interface 812, a sensor component 814, and a communication component 816.

The processing component 802 generally controls the overall operation of the user equipment 800, such as operations associated with display, phone calls, data communications, camera operations, and recording operations. The processing component 802 may include one or more processors 820 to execute instructions so that all or some of the steps of the above method(s) are implemented. In addition, the processing component 802 may include one or more modules to facilitate interactions between the processing component 802 and other components. For example, the processing component 802 may include a multimedia module to facilitate interactions between the multimedia component 808 and the processing component 802.

The memory 804 is configured to store various types of data to support the operation of the user equipment 800. Examples of such data include instructions for any application or method operating on the user equipment 800, contact data, phone book data, messages, pictures, videos, etc. The memory 804 may be implemented by any type of volatile or non-volatile storage device or a combination thereof, such as static random access memory (SRAM), electrically erasable programmable read-only memory (EEPROM), erasable programmable read-only memory (EPROM), programmable read-only memory (PROM), read-only memory (ROM), magnetic memory, flash memory, magnetic disk, or optical disk.

The power component 806 provides power to various components of the user equipment 800. The power component 806 may include a power management system, one or more power supplies, and other components associated with generating, managing and distributing power for the user equipment 800.

The multimedia component 808 includes a screen that provides an output interface between the user equipment 800 and the user. In some embodiments, the screen may include a liquid crystal display (LCD) and a touch panel (TP). If the screen includes a touch panel, the screen may be implemented as a touch screen to receive input signals from the user. The touch panel includes one or more touch sensors to sense touch, slide, and gestures on the touch panel. The touch sensor can not only sense the boundaries of the touch or slide action, but also detect the duration and pressure associated with the touch or slide operation. In some embodiments, the multimedia component 808 includes a front camera and/or a rear camera. When the user equipment 800 is in an operation mode, such as a shooting mode or a video mode, the front camera and/or the rear camera can receive external multimedia data. Each of the front camera and the rear camera may be a fixed optical lens system or have a focal length and optical zooming capability.

The audio component 810 is configured to output and/or input audio signals. For example, the audio component 810 includes a microphone (MIC). When the user equipment 800 is in an operation mode, such as a call mode, a recording mode, and a voice recognition mode, the microphone (MIC) is configured to receive external audio signals. The received audio signal may be further stored in the memory 804 or sent via the communication component 816. In some embodiments, the audio component 810 also includes a speaker for outputting audio signals.

The I/O interface 812 provides an interface between the processing component 802 and the peripheral interface module, which may be a keyboard, a click wheel, a button, etc. These buttons may include, but are not limited to, a home button, a volume button, a start button, and a lock button.

The sensor component 814 includes one or more sensors for providing various aspects of status assessment for the user equipment 800. For example, the sensor component 814 can detect the on/off state of the user equipment 800, the relative positioning of components, such as the display and keypad of the user equipment 800. The sensor component 814 can also detect the position change of the user equipment 800 or a component of the user equipment 800, the presence or absence of user contact with the user equipment 800, the orientation or acceleration/deceleration of the user equipment 800, and the temperature change of the user equipment 800. The sensor component 814 may include a proximity sensor configured to detect the presence of nearby objects without any physical contact. The sensor component 814 may also include a light sensor, such as a CMOS or CCD image sensor, for use in imaging applications. In some embodiments, the sensor component 814 may also include an acceleration sensor, a gyroscope sensor, a magnetic sensor, a pressure sensor, or a temperature sensor.

The communication component 816 is configured to facilitate wired or wireless communication between the user equipment 800 and other devices. The user equipment 800 can access a wireless network based on a communication standard, such as WiFi, 4G or 5G, or a combination thereof. In an example embodiment, the communication component 816 receives a broadcast signal or broadcast related information from an external broadcast management system via a broadcast channel. In an example embodiment, the communication component 816 also includes a near field communication (NFC) module to facilitate short-range communication. For example, the NFC module may be implemented based on radio frequency identification (RFID) technology, infrared data association (IrDA) technology, ultra-wideband (UWB) technology, Bluetooth (BT) technology, and other technologies.

In an example embodiment, the user equipment 800 may be implemented by one or more application-specific integrated circuits (ASICs), digital signal processors (DSPs), digital signal processing devices (DSPDs), programmable logic devices (PLDs), field programmable gate arrays (FPGAs), controllers, microcontrollers, microprocessors, or other electronic components for performing the above method(s).

In an example embodiment, a non-transitory computer-readable storage medium including instructions is also provided, such as a memory 804 including instructions. The above instructions can be executed by a processor 820 of the user equipment 800 to complete the above method(s). For example, the non-transitory computer-readable storage medium may be a ROM, a random access memory (RAM), a CD-ROM, a tape, a floppy disk, an optical data storage device, etc.

As shown in Fig. 16, an embodiment of the present disclosure shows a structure of a base station. For example, the base station 900 may be provided as a network side device. Referring to Fig. 16, the base station 900 includes a processing component 922, which further includes one or more processors, and a memory resource represented by a memory 932 for storing instructions executable by the processing component 922, such as an application. The application stored in the memory 932 may include one or more modules, and each module corresponds to a set of instructions. In addition, the processing component 922 is configured to execute instructions to perform any of the aforementioned methods applied to the base station.

The base station 900 may also include: a power component 926, configured to perform power management of the base station 900; a wired or wireless network interface 950, configured to connect the base station 900 to a network; and an input/output (I/O) interface 958. The base station 900 may operate based on an operation system stored in the memory 932, such as Windows Server TM, Mac OS XTM, UnixTM, LinuxTM, FreeBSDTM, or the like.

Other embodiments of the present disclosure will be easily conceived by those skilled in the art after considering the specification and practicing the content disclosed herein. The present disclosure is intended to cover any variation, use, or adaptation of the present disclosure that follows the general principles of the present disclosure and includes common knowledge or customary techniques in the art that are not disclosed in the present disclosure. The description and embodiments are to be regarded as examples only, and the true scope and spirit of the present disclosure are indicated by the following claims.

It should be understood that the present disclosure is not limited to the precise structure described above and shown in the accompanying drawings, and various modifications and changes may be made without departing from the scope thereof. The scope of the present disclosure is limited only by the appended claims.

## Claims

1. An information processing method, performed by a first User Equipment (UE), and comprising:
sending a first request message to a second UE, wherein the first request message comprises first identification information of the first UE and second identification information of the second UE, the first request message is used to request establishment of a direct connection communication, and the first request message further comprises third identification information of a third UE for requesting a ranging result and a ranging service code for indicating a request ranging service.

2. The method according to claim 1, comprising:
receiving a first response message sent by the second UE, wherein the first response message comprises rejection indication information, and the rejection indication information is used to indicate suspension of establishing the direct connection communication.

3. An information processing method, performed by a second User Equipment (UE), and comprising:
receiving a first request message sent by a first UE, wherein the first request message comprises first identification information of the first UE and second identification information of the second UE, the first request message is used to request establishment of a direct connection communication, and the first request message further comprises third identification information of a third UE for requesting a ranging result and a ranging service code for indicating a request ranging service.

4. The method according to claim 3, comprising:
sending a second request message to a first network node, wherein the second request message comprises the second identification information, the first identification information, the third identification information, and the ranging service code, and the second request message is used to request permission for the first UE to acquire the ranging result of the third UE.

5. The method according to claim 4, wherein the first network node is a ProSe Key Management Function (PKMF) of the second UE or a Policy Control Function (PCF) of the second UE.

6. The method according to claim 4, comprising:
receiving a second response message sent by the first network node, wherein the second response message is used to indicate whether the first UE is authorized to acquire the ranging result of the third UE.

7. The method according to claim 3, comprising:
sending a second request message to a second network node, wherein the second request message comprises the second identification information, the first identification information, the third identification information, and the ranging service code, and the second request message is used to request permission for the first UE to acquire the ranging result of the third UE.

8. The method according to claim 7, wherein the second network node is a ranging positioning server.

9. The method according to claim 7, comprising:
receiving a second response message sent by the second network node, wherein the second response message is used to indicate whether the first UE is authorized to acquire the ranging result of the third UE.

10. The method according to claim 6 or 9, comprising:
determining, based on the second response message, that the first UE is authorized to acquire the ranging result of the third UE, and sending a first response message comprising success indication information to the first UE, wherein the success indication information is used to indicate a successful establishment of the direct connection communication; or
determining, based on the second response message, that the first UE is not authorized to acquire the ranging result of the third UE, and sending a first response message comprising rejection indication information to the first UE, wherein the rejection indication information is used to indicate suspension of establishing the direct connection communication.

11. An information processing method, performed by a first network node, and comprising:
receiving a second request message sent by a second User Equipment (UE), wherein the second request message comprises second identification information, first identification information, third identification information, and a ranging service code for indicating a request ranging service, and the second request message is used to request permission for a first UE to acquire a ranging result of a third UE,
wherein the second request message is sent by the second UE after receiving the first request message, and the first request message is used to request establishment of a direct communication connection between the first UE and the second UE.

12. The method according to claim 11, wherein the first request message comprises the first identification information, the second identification information, the ranging service code, and third identification information of the third UE for requesting the ranging result.

13. The method according to claim 11, comprising:
sending the second request message to a third network node;
receiving a second response message sent by the third network node, wherein the second response message is used to indicate whether the first UE is authorized to acquire the ranging result of the third UE.

14. The method according to claim 11, comprising:
sending the second request message to a second network node;
receiving second response message sent by the second network node, wherein the second response message is used to indicate whether the first UE is authorized to acquire the ranging result of the third UE.

15. The method according to claim 13 or 14, comprising:
sending the second response message to the second UE.

16. The method according to claim 13, wherein the second response message is determined by the third network node, or the third response message is acquired by the third network node from a second network node.

17. The method according to claim 13, wherein the third network node is a ProSe Key Management Function (PKMF) of the first UE or a Policy Control Function (PCF) of the first UE.

18. An information processing method, performed by a second network node, and comprising:
receiving a second request message sent by a first network node or a third network node, wherein the second request message comprises second identification information, first identification information, third identification information, and a ranging service code for indicating a request ranging service, and the second request message is used to request permission for a first UE to acquire a ranging result of a third UE,
wherein the second request message is sent by a second UE after receiving the first request message, and the first request message is used to request establishment of a direct communication connection between the first UE and the second UE.

19. The method according to claim 18, wherein the first request message comprises the first identification information, the second identification information, the ranging service code, and third identification information of the third UE for requesting the ranging result.

20. The method according to claim 18, comprising:
sending a second response message to the first network node or the third network node, wherein the second response message is used to indicate whether the first UE is authorized to acquire the ranging result of the third UE.

21. An information processing method, performed by a third network node, and comprising:
receiving a second request message sent by a first network node, wherein the second request message comprises second identification information, first identification information, third identification information, and a ranging service code for indicating a request ranging service, and the second request message is used to request permission for the first UE to acquire a ranging result of a third UE,
wherein the second request message is sent by a second UE after receiving the first request message, and the first request message is used to request establishment of a direct communication connection between the first UE and the second UE.

22. The method according to claim 21, wherein the first request message comprises the first identification information, the second identification information, the ranging service code, and third identification information of the third UE for requesting the ranging result.

23. The method according to claim 21, comprising:
acquiring a second response message, wherein the second response message is used to indicate whether the first UE is authorized to acquire the ranging result of the third UE; and
sending the second response message to the first network node.

24. The method according to claim 23, wherein acquiring the second response message comprises:
determining the second response message based on the second request message.

25. The method according to claim 23, comprising:
sending the second request message to the second network node; and
acquiring the second response message comprises:
receiving the second response message sent by the second network node.

26. The method according to claim 21, at least one of the following applies:
the second network node is a ranging positioning server;
the first network node is a ProSe Key Management Function (PKMF) of the second UE or a Policy Control Function (PCF) of the second UE; or
the third network node is a ProSe Key Management Function (PKMF) of the first UE or a Policy Control Function (PCF) of the first UE.

27. An information processing apparatus, comprising:
a first sending module, configured to send a first request message to a second User Equipment (UE), wherein the first request message comprises first identification information of a first UE and second identification information of the second UE, the first request message is used to request establishment of a direct connection communication, and the first request message further comprises third identification information of a third UE for requesting a ranging result and a ranging service code for indicating a request ranging service.

28. An information processing apparatus, comprising:
a second receiving module, configured to receive a first request message sent by a first UE, wherein the first request message comprises first identification information of the first UE and second identification information of a second UE, the first request message is used to request establishment of a direct connection communication, and the first request message further comprises third identification information of a third UE for requesting a ranging result and a ranging service code for indicating a request ranging service.

29. An information processing apparatus, comprising:
a third receiving module, configured to receive a second request message sent by a second User Equipment (UE), wherein the second request message comprises second identification information, first identification information, third identification information, and a ranging service code for indicating a request ranging service, and the second request message is used to request permission for the first UE to acquire a ranging result of a third UE,
wherein the second request message is sent by the second UE after receiving the first request message, and the first request message is used to request establishment of a direct communication connection between the first UE and the second UE.

30. An information processing apparatus, comprising:
a fourth receiving module, configured to receive a second request message sent by a second User Equipment (UE) or a third network node, wherein the second request message comprises second identification information, first identification information, third identification information, and a ranging service code for indicating a request ranging service, and the second request message is used to request permission for the first UE to acquire a ranging result of a third UE,
wherein the second request message is sent by the second UE after receiving the first request message, and the first request message is used to request establishment of a direct communication connection between the first UE and the second UE.

31. An information processing apparatus, comprising:
a fifth receiving module, configured to receive a second request message sent by a first network node, wherein the second request message comprises second identification information, first identification information, third identification information, and a ranging service code for indicating a request ranging service, and the second request message is used to request permission for the first UE to acquire a ranging result of a third UE,
wherein the second request message is sent by the second UE after receiving the first request message, and the first request message is used to request establishment of a direct communication connection between the first UE and the second UE.

32. A communication device, comprising:
a processor; and
a memory for storing executable instructions of the processor, wherein
the processor is configured to, when running the executable instructions, implement the information processing method according to any one of claims 1 to 2, or claims 3 to 10, or claims 11 to 17, or claims 18 to 20, or claims 21 to 26.

33. A computer storage medium, having a computer executable program stored thereon, wherein, when the computer executable program is executed by a processor, the information processing method according to any one of claims 1 to 2, or claims 3 to 10, or claims 11 to 17, or claims 18 to 20, or claims 21 to 26 is implemented.
